# EUROPEAN PATENT SPECIFICATION

(11) **EP 2 093 969 B1**
(45) Date of publication and mention of the grant of the patent: **29.05.2013**
(21) Application number: 08290172.9
(22) Date of filing: 21.02.2008
(51) Int. Cl.: H04L 29/06

(54) **Multi-layer profile architecture for H.248 controlled media gateways**
Mehrschichtige Profilarchitektur für H.248 gesteuerte Media-Gateways
Architecture de profil multicouche pour passerelles de média contrôlées par H.248

(43) Date of publication of application: 26.08.2009
(73) Proprietor: Alcatel Lucent, 75007 Paris (FR)
(72) Inventor: Winkler, Andreas, 71254 Ditzingen/Hirschlanden (DE); Stoetzer-Bradler Juergen, 71672 Marbach/Neckar (DE); Waitzmann, Carsten, 70806 Kornwestheim (DE)
(74) Representative: Wetzel, Emmanuelle

(56) References cited:
- WO-A-2006/091029
- US-A1- 2002 059 404
- US-A1- 2005 235 048
- US-A1- 2006 291 437
- CHOONG SEON HONG ET AL: "A multimedia service networking architecture and its applications in TINA-like model" LOCAL COMPUTER NETWORKS, 1996., PROCEEDINGS 21ST IEEE CONFERENCE ON MINNEAPOLIS, MN, USA 13-16 OCT. 1996, LOS ALAMITOS, CA, USA,IEEE COMPUT. SOC, US, 13 October 1996 (1996-10-13), pages 326-334, XP010200702 ISBN: 978-0-8186-7617-8

## Description

### Background of the invention

The invention relates to a Media gateway (MGW), for transfer of digital media data from one network type to another network type, said network types using different data transfer protocols,
in particular for a next generation network (NGN) or internet protocol multimedia subsystem (IMS),
wherein the media gateway is H.248 controlled and comprises a media gateway controller which virtually parts hardware resources of the media gateway into a multitude of virtual media gateway (virtual MGW) instances for handling different data sources connected to the MGW, each of said different data sources being handled by one of the virtual media gateway instances.

Such a media gateway is known from ITU-T H.248.1v3, chapter 11.1.

Media gateways (MGWs) are used to transfer digital media data (in particular speech, audio or video data) from one network type of network to another network type, wherein these different network types use different data transfer protocols. Media gateways are used, in particular, in next generation networks or internet protocol telephony.

MGWs include trunking MGWs, linking TDM (time division multiplex) with IP (internet protocol), further border MGWs, linking IP with IP, and access MGW, among others.

Each H.248-operated MGWs may handle a multitude of so-called virtual MGW instances, according to the ITU-T H.248.1 standard. For this purpose, a media gateway controller virtually parts the media gateway in order to spread the hardware resources of the media gateway to different data sources (such as different TDM channels) connected to the MGW. Each data source is handled by a virtual MGW instance. The media gateway needs operation information for each virtual MGW instance in order to define and enable a functional range. Said operation information has to be provided at the MGW.

The more virtual MGW instances are to be handled with a single MGW, the more complex the provision and administration of said operation information at the MGW will be.

WO 2006/091029 A1 discloses a network which is linked to the internet by a home gateway and which can be accessed via an external device linked to an internet server. The home gateway is linked to a RS-485 network, to which network managers, appliance devices and further routers are connected, which in turn may connect further appliance devices. The network manager of the network applies a network protocol stack with several hierarchical layers, such as a physical layer, a data link layer, a home code control layer, a network layer, an application layer and an application software layer.

### Object of the invention

It is the object of the invention to facilitate the provision and administration of the operating information for operating a large number of virtual MGW instances at a media gateway.

### Short description of the invention

This object is achieved, in accordance with the invention, by a media gateway as introduced in the beginning, characterized in that
a) that the media gateway comprises a subprofile storage in which the information for operating said virtual MGW instances is stored and categorized into three subprofile layers, said subprofile layers being
   - a system profile layer in which at least one system profile is stored, wherein each system profile characterizes the physical MGW;
   - a virtual MGW profile layer in which at least one virtual MGW profile is stored, wherein each virtual MGW profile characterizes a virtual MGW; and
   - a H.248 profile layer in which at least one H.248 profile is stored, wherein each H.248 profile characterizes a H.248 related operation mode;
b) that the media gateway comprises a gateway profile storage in gateway profiles (GW profile) are stored, wherein each GW profile does not contain said information for operating a virtual media gateway but only contains an assignment of
   - one of the stored system profiles,
   - one of the stored virtual MGW profiles, and
   - at least one of the stored H.248 profiles,
c) that each virtual MGW instance of the media gateway is associated with one of the stored gateway profiles for operating the virtual MGW instance; and;
d) that the same stored H.248 Profile is associated with multiple stored gateway profiles and/or that the same stored virtual MGW profile is associated with multiple stored GW profiles and/or that the same stored system profile is associated with multiple stored GW profiles.

The information needed for operating a particular virtual MGW instance at a media gateway (MGW) is categorized, in accordance with the invention, into three subprofile levels (or layers). In each subprofile level, there is a part of the information needed for operating a particular virtual MGW instance. One subprofile from each of the three subprofile levels is necessary (and sufficient) for operating a virtual MGW instance. So the information from three subprofiles completes the information for operating a particular virtual MGW instance. The subprofiles are stored at the MGW.

The subprofile levels according to the invention are
● system profile level (used to characterize a physical MGW, e.g. in terms of redundancy group management; there can be only one system profile in use at a point in time on a given physical MGW)
● virtual MGW profile level (used to characterize a virtual MGW, e.g. in terms of transport protocol)
● H.248 profile level (used to characterize the H.248 related operation mode, e.g. in terms of used H.248 packages).
In the following, the term "subprofile" refers to a system profile or a virtual MGW profile or a H.248 profile.

In order to operate virtual MGW instances at a MGW, according to the invention, gateway profiles (GW profiles) are applied. The GW profiles are stored at the MGW. Each virtual MGW instance is associated with one stored GW profile (In the most simple case, there is one GW profile for each virtual media gateway, but it is also possible to have multiple virtual MGW instances associated to the same GW profile, and/or to have some GW profiles which are not associated to any virtual MGW instance yet). The GW profile *itself does not contain the operating information* for operating a virtual media gateway. The GW profile only contains *assignments* (i.e. identifications, references), such as index numbers, to subprofiles stored at the media gateway. The subprofiles assigned in one GW profile together store the complete operation information needed for the operation of the virtual MGW instance associated with the GW profile. For operating a particular virtual MGW instance with an associated GW profile, the assignments of the GW profile are read out from the gateway profile storage, and the assigned subprofiles are read out from (or accessed at) the subprofile storage.

Since different virtual MGW instances handled at the same MGW are typically similar, and often even identical, they also have operating information in common. By classifying the operation information in accordance with the invention in subprofile levels, this results in identical operating information in one or more subprofile levels for different virtual MGW instances. The invention allows to store such identical operating information only once, namely in the respective subprofiles, instead of multiple times for each virtual MGW instance separately.

So in accordance to the invention, stored subprofiles may be used in common ("shared") by different virtual MGW instances. This reduces the data storage capacity needed at a MGW, and also facilitates the administration and updating of operating information. If, for example, due to a change in the connected hardware, a characteristic of the physical MGW changes for all virtual MGW instances, it is only necessary to change a few system profiles, instead of altering separately stored operating information for all virtual MGW instances.

According to the invention, the storages at the MGW necessary to provide the operating information for all virtual MGW instances at a media gateway only need to store
- all subprofiles that are found in any one of the GW profiles at the media gateway, and
- all GW profiles that are found as association to any one of the virtual MGW instances at the media gateway.
Note that additionally, subprofiles and/or GW profiles may be stored that are not active, for preparation purposes.This prevents the storing of identical information multiple times, and simplifies administration and updating of the information by altering subprofiles used in common. Note that the fraction of commonly useable subprofiles depends on the particular media gateway and its virtual MGW instances.

The invention is particularly suited to operate a large number of virtual MGW instances at a single media gateway, such as 64 or more, and in particular 256 or more virtual MGW instances.

### Preferred variants of the invention

According to a preferred embodiment of the invention, the same stored GW profile is associated with a multitude of virtual MGW instances. In this case, a multiple storing of identical GW profiles may be avoided. The GW profiles are typically indexed. For each virtual MGW instance, an assignment (or reference, identification) of one of the stored GW profiles may be stored, typically in the media gateway storage, or in an separate correlation storage of the media gateway. The administration and updating of GW profiles, in particular a change in the assignment of subprofiles, can be simplified with this embodiment.

In another embodiment of the inventive media gateway, the media gateway comprises means for creating new subprofiles from existing subprofiles and/or from profile templates. This facilitates the creation of new subprofiles. A programming "from scratch" can be avoided; only changes or particularities must be programmed.

Another preferred embodiment, the subprofile storage has subprofiles stored which are not yet assigned to a stored GW profile, and/or that gateway profile storage has GW profiles stored which are not yet assigned to a virtual MGW instance. By this means, changes in the operation information, such as updates, may be prepared without (or only marginally) paralyzing or interfering with the current operation of the media gateway.

Also within the scope of the present invention is a method for operation a media gateway, for transport of digital media data from one network type to another network type, said network types using different data transfer protocols, in particular wherein the media gateway is part of a next generation network (NGN) or an internet protocol multimedia subsystem (IMS),
wherein the media gateway is H.248 controlled and comprises a media gateway controller which virtually parts hardware resources of the media gateway into multitude of virtual media gateway (virtual MGW) instances for handling different data sources connected to the media gateway, each of said different data sources being handled by one of the virtual media gateway instances, the method comprising the following steps:
a) storing information for operating said virtual MGW instances in a subprofile storage and categorizing the information into three subprofile layers, said subprofile layers being
   - a system profile layer in which at least one system profile is stored, wherein each system profile includes all global settings characterizing a physical MGW,
   - a virtual MGW profile layer in which at least one virtual MGW profile is stored, wherein each virtual MGW profile characterizes a virtual MGW, and
   - a H.248 profile level in which at least one H.248 profile is stored, wherein each H.248 profile characterizes a H.248 related operation mode,
b) storing that gateway profiles (GW profiles) in a gateway profile storage of the media gateway, wherein each GW profile does not contain said information for operating a virtual media gateway but only contains an assignment of
   - one of the stored system profiles,
   - one of the stored virtual MGW profiles, and
   - at least one of the stored H.248 profiles,
c) and associating and operating each virtual MGW instance with one of the stored gateway profiles, wherein the same stored H.248 profile is shared by a multitude of stored GW profiles, and/or the same stored virtual MGW profile is shared by a multitude of stored GW profiles, and/or the same stored system profile is shared by a multitude of stored GW profiles. By the inventive method, the administration of operating information at the media gateway is simplified, saving processor capacity and data storage capacity. Operating information which is identical for a plurality of virtual MGW instances can be handled in common, thus avoiding double processing.

Shared here means that the identical subprofile has been assigned to multiple GW profiles and is used in common via these multiple GW profiles. In general, the more subprofiles are shared, the more efficient the MGW can be operated.

In another preferred variant of the inventive method, a multitude of virtual MGW instances are associated and operated with the same stored GW profile. This avoids storing and administrating a plurality of identical GW profiles.

Further preferred is a variant, wherein new subprofiles are created from existing subprofiles and/or from profile templates. This avoids creating new subprofiles "from scratch".

Another variant of the inventive method is characterized in that subprofiles are created or modified before they are assigned to a GW profile which operates a virtual MGW instance, and/or the association of subprofiles to a GW profile is modified before said GW profile operates a virtual MGW instance. By this means, changes in the operation information of virtual MGW profiles can be prepared, and troubles in the operation of the MGW at switching to the amended operation information can be kept to a minimum.

Note here that alternatively or in addition, and in accordance with the invention, subprofiles can be modified while being assigned to one or several GW profiles, including GW profiles already operating virtual MGW instances, with the consequence that these modifications become valid for all GW profiles sharing the respective subprofiles.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing and detailed description of the invention

The invention is shown in the drawing.

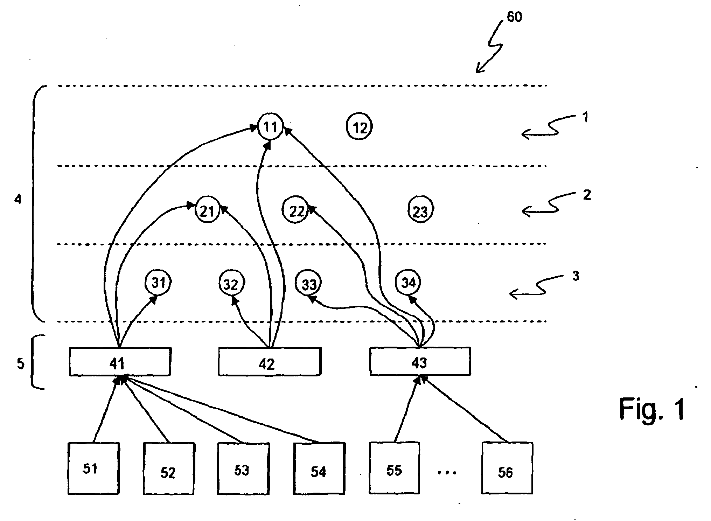

- Fig. 1: shows schematically the inventive multi-layer profile architecture of a media gateway.

### Introduction

The present invention relates to a multi-layer profile architecture for H.248 controlled media gateways.

H.248 controlled media gateways (MGWs) are a key element of next generation networks (NGN) as well as IP multimedia subsystem (IMS) related network architectures. There are several MGWs types, like trunking MGWs, access MGWs or border MGWs, to all of which the invention is applicable.

The invention addresses the problem how to efficiently manage MGWs even in case a considerable number of virtual MGWs (following the approach of MGW virtualization as defined in ITU-T H.248.1 v3 chapter 11.1) are instanciated as well as a single or multiple H.248 profiles are in use.

H.248 profiles are defined in accordance to the H.248 profile template in ITU-T H.248.1v3 Appendix III; multiple H.248 profiles can be enabled per virtual MGW instance and profile negotiation can be done between the MGC (media gateway controller) and the media gateway according to ITU-T H.248.18.

In addition to H.248 profiles, other settings may be common or different to virtual MGW instances, thus this invention introduced the so-called virtual MGW profile. Furthermore, overall system settings have been grouped in a so-called system profile.

With the invention, the manageability of the network element MGW is ensured in a reliable and easy way. The inventive, clear structuring of profiles highly increases the efficiency of managing virtual MGW instances using multiple H.248 profiles, in particular in case of a high degree of virtualization.

### Layer structure

The invention introduces several subprofile levels:
- system profile, used to characterize a physical MGW, e.g. in terms of redundancy group management; there can be only one system profile in use at a point in time on a given physical MGW (The system profile includes all global settings, valid for the complete physical gateway),
- virtual MGW profile, used to characterize a virtual MGW, e.g. in terms of transport protocol (The virtual MGW profile includes all settings, valid per virtual MGW, "virtual MGW scope"),
- H.248 profile, used to characterize the H.248 related operation mode, e.g. in terms of used H.248 packages (The H.248 profile includes all settings, valid per MGW application, defined in H.248 standard; possible applications include fixed trunking, IMS Mn, mobile trunking Mc, and IP trunking).

Subprofiles are linked together using a so-called gateway profile (GW profile). A GW profile consists of:
- one system profile,
- one virtual MGW profile, and
- one or multiple H.248 profiles
assigned to it. Subprofiles can be associated in a flexible and dynamic way to a GW profile. Every subprofile can be linked to any GW profile, that is to say any new combination of subprofiles results in a new GW profile.

Whenever a new virtual MGW instance is created, a GW profile has to be assigned. Multiple virtual MGW instances may share the same GW profile. Whenever a new system/virtual MGW/H.248 profile is created, this can be inherited from an existing subprofile or from so-called profile templates. Profile templates are defined e.g. in accordance to the standardized H.248 profiles within ITU, ETSI TISPAN, 3GPP or MSF.

### Profile sharing

The invention proposes a subprofile and GW profile sharing:
- the same (identical) H.248 profile can be associated with multiple GW profiles,
- the same (identical) virtual MGW profile can be associated with multiple GW profiles,
- the same (identical) system profile can be associated with multiple MGW profiles,
- the same (identical) GW profile can be assigned to any number of virtual MGW instances, i.e. GW profiles can be shared by multiple V-MGW instances.

For the purpose of preparation, profiles can be created and modified, or association to GW profiles can be modified, before a GW profile gets actually assigned to a virtual MGW instance.

Based on this invention, the manageability of the network element MGW is ensured as the typical number of required system, virtual MGW and H.248 profiles as well as their associated GW profiles is small, as compared to the overall number of handled virtual MGW instances of the media gateway. Profiles can be easily shared on all levels.

### Profile templates

Further simplification is achievable by means of profile templates on all levels. H.248 profile templates are defined in relationship to existing standardized H.248 profiles. System and virtual MGW profile templates are provided based on typical use cases. Customization of any profile level is supported, and in particular a mixture of customized and template profiles can be associated to a GW profile.

### Particular advantages of the invention

The introduction of multiple (sub-)profile levels enables network operators to efficiently manage their MGWs, especially in case that a higher degree of MGW virtualization is in use. The need for virtualization can be driven by geographic redundancy schemes or MGW capacity fragmentation needs, that is to say the capacity of a physical MGW is fragmented into several virtual MGW instances associated to the same number of media gateway controller instances. Profile settings may be copied from one MGW to another MGW. Multiple profile levels therefore ensure clarity, predictability and simplicity of the system behavior. By means of the invention, media gateway systems are easier to manage, and system behavior is more predictable and easier to control. The invention also simplifies fault localization and analysis.

The system/virtual MGW/H.248 profile concept allows to easily customize system configuration in accordance to customer specific requirements.

### Figure description

**Figure 1** illustrates, by way of example, the multi-layer architecture 60 of an inventive media gateway. The architecture 60 includes three subprofile layers, namely a system profile layer 1, a virtual MGW profile layer 2, and a H.248 profile layer 3.

A subprofile storage 4 stores (here) two different system profiles 11, 12, further three different virtual MGW profiles 21, 22, 23, and further four H.248 profiles 31, 32, 33, 34. The system profiles 11, 12, the virtual MGW profiles 21-23 and the H.248 profiles 31-34 are all subprofiles.

A media gateway storage 5 stores (here) three GW profiles 41, 42, 43. Typically during GW profile creation, subprofiles are associated with GW profiles, see the curved arrows. In the example shown, GW profile 41 has assigned system profile 11, virtual MGW profile 21, and H.248 profile 31. GW profile 42 has assigned system profile 11, virtual MGW profile 21 and H.248 profile 32. GW profile 43 has assigned system profile 11, virtual MGW profile 22 and two H.248 profiles 33, 34. The latter illustrates that multiple H.248 profiles can be associated to a single GW profile.

Note that there are subprofiles that can be created without being associated to a GW profile, what is typically done in a preparation phase (i.e. before enabling/switching functionalities in operation); here system profile 12 and virtual MGW profile 23 are not assigned to a GW profile yet. Further note that the identical system profile 11 is shared by three GW profiles 41, 42, 43, and virtual MGW profile 21 is shared by GW profiles 41, 42.

The architecture 60 further comprises virtual MGW instances 51-56 of the media gateway. For each virtual MGW instance 51-56, there is an association with (or assignment to) one of the GW profiles 41-43. In the example shown, virtual MGW instances 51 through 54 are associated with GW profile 41, and virtual MGW instances 55 through 56 are associated with GW profile 43. In other words, GW profile 41 is shared by the virtual GW instances 51 through 54, and GW profile 43 is shared by the virtual MGW instances 55 through 56. GW profile 42 currently is not associated with any virtual MGW instance, i.e. it is not active. The latter illustrates that GW profiles may be created or modified without being associated with a virtual MGW instance.

When changing, for example, H.248 profile 31, this will result in changes for virtual MGW instances 51 through 54, via the GW profile 41. In contrast, when modifying H.248 profile 32, this will not result in changes for any virtual MGW instance, since the only GW profile that has an assignment to subprofile 32, namely GW profile 42, is not active. Also, modifying subprofiles 12, 23 will not result in changes for a virtual MGW instance, since these subprofiles are not assigned to any GW profiles.

In summary, the present invention proposes to classify the operating information of virtual MGW instances in a H.248 controlled media gateway into several subprofile levels. The operation information for a multitude of virtual MGW instances is stored in subprofiles. When multiple virtual MGW instances have identical operation information on a subprofile level, said information is stored only once as one subprofile of said subprofile level, and said subprofile is shared by these multiple virtual MGW instances (i.e. used in common). This is accomplished by introducing GW profiles, which contain references to a set of subprofiles, with the subprofiles of said set containing the operating information for operating a virtual MGW instance. Each virtual MGW instance is associated to one GW profile. When different virtual MGW instances are to share a particular subprofile, their associated GW profiles simply have to assign this subprofile each. Different virtual MGW instances with the completely identical operating information may share the identical GW profile. It is preferred to directly use three subprofile levels for classifying the operation information for operating a virtual MGW instance, but a finer classification is also possible, in accordance with the invention. At least one subprofile level can be further spread into partial subprofile levels, wherein a complete set of partial subprofiles gives the operating information of the corresponding subprofile level. Then a GW profile may assign a subprofile by directly assigning its partial subprofiles, what corresponds to an effective use of more than three subprofile levels. Alternatively, a subprofile assigned by a GW profile may in turn assign its partial subprofiles. The partial subprofiles may be stored in the subprofile storage.

## Claims

1. Media gateway, further referred to as MGW, for transfer of digital media data from one network type to another network type, said network types using different data transfer protocols,
wherein the media gateway is H.248 controlled and comprises a media gateway controller which virtually parts hardware resources of the media gateway into a multitude of virtual media gateway instances (51-56) for handling different data sources connected to the MGW, each of said different data sources being handled by one of the virtual media gateway instances,
**characterized in**
a) **that** the media gateway comprises a subprofile storage (4) in which the information for operating said virtual MGW instances is stored and categorized into three subprofile layers, said subprofile layers being
- a system-profile layer in which at least one system profile (11, 12) is stored, wherein each system profile (11, 12) includes all global settings for characterizing the physical MGW;
- a virtual MGW profile layer in which at least one virtual MGW profile(21-23) is stored, wherein each virtual MGW profile (21-23) characterizes a virtual MGW instance; and
- a H.248 profile layer in which at least one H.248 profile (31-34) is stored, each H.248 profile (31-34) characterizing a H.248 related operation mode;
b) **that** the media gateway comprises a gateway profile storage (5), in which gateway profiles (41-43), further referred to as GW profiles, are stored, wherein each GW profile (41-43) contains an assignment of
- one of the stored system profiles (11, 12),
- one of the stored virtual MGW profiles (21-23), and
- at least one of the stored H.248 profiles (31-34),
c) **that** each virtual MGW instance (51-56) of the media gateway is associated with one of the stored gateway profiles (41-43) for operating the virtual MGW instance (51-56); and
d) **that** the same stored H.248 profile (31-34) is associated with multiple stored GW profiles (41-43),
and/or that the same stored virtual MGW profile (21-23) is associated with multiple stored GW profiles (41-43),
and/or that the same stored system profile (11, 12) is associated with multiple stored GW profiles (41-43).

2. Media gateway according to claim 1, **characterized in that** the same stored GW profile (41-43) of the media gateway is associated with a multitude of virtual MGW instances (51-56).

3. Media gateway according to claim 1, **characterized in that** the media gateway comprises means for creating new subprofiles from existing subprofiles and/or from profile templates.

4. Media gateway according to claim 1, **characterized in**
**that** the subprofile storage (4) has subprofiles (12, 23) stored which are not yet assigned to a stored GW profile (41-43),
and/or that gateway profile storage (5) has GW profiles (42) stored which are not yet assigned to a virtual MGW instance (51-56).

5. Method for operation of a media gateway, further referred to as MGW, for transfer of digital media data from one network type to another network type, the network types using different data transfer protocols,
wherein the media gateway is H.248 controlled and
comprises a media gateway controller which virtually parts hardware resources of the media gateway into a multitude of virtual media gateway instances (51-56) for handling different data sources connected to the MGW, each of said different data sources being handled by one of the virtual media gateway instances, the method comprising the following steps:
a) storing information for operating said virtual MGW instances in a subprofile storage and categorizing the information into three subprofile layers, said subprofile layers being - a system profile layer in which at least one system profile (11, 12) is stored, wherein each system profile (11, 12) includes all global settings for characterizing the physical MGW,
- a virtual MGW profile layer in which at least one virtual MGW profile (21-23) is stored, wherein each virtual MGW profile (21-23) characterizes a virtual MGW instance, and
- a H.248 profile level in which at least one H.248 profile (31-34) is stored, each H.248 profile (31-34) characterizing a H.248 related operation mode,
b) storing gateway profiles (41-43), further referred to as GW profiles, in a gateway profile storage of the media gateway, wherein each GW profile (41-43) contains an assignment of
- one of the stored system profiles (11, 12),
- one of the stored virtual MGW profiles (21-23), and
- at least one of the stored H.248 profiles (31-34),
c) and associating and operating each virtual MGW instance (51-56) with one of the stored gateway profiles (41-43) such that a multitude of stored GW profiles (41-43) shares the same stored H.248 profile (31-34) and/or a multitude of stored GW profiles (41-43) shares the same stored virtual MGW profile (21-23)
and/or a multitude of stored GW profiles (41-43) shares the same stored system profile (11, 12).

6. Method according to claim 5, **characterized by** associating and operating a multitude of virtual MGW instances (51-56) with the same stored GW profile (41-43).

7. Method according to claim 5, **characterized by** creating new subprofiles from existing subprofiles and/or from profile templates.

8. Method according to claim 5, **characterized by** creating or modifying subprofiles (12, 23) before they are assigned to a GW profile (41-43) which operates a virtual MGW instance (51-56),
and/or modifying the association of subprofiles (11-34) to a GW profile (41-43) before said GW profile (41-43) operates a virtual MGW instance (51-56).

## Patentansprüche

1. Media-Gateway, nachfolgend als MGW bezeichnet, für den Transfer von digitalen Mediadaten von einem Netzwerktyp an einen anderen Netzwerktyp, wobei die besagten Netzwerktypen unterschiedliche Datenübertragungsprotokolle verwenden, wobei das Media-Gateway H.248-gesteuert wird und einen Media-Gateway-Controller umfasst, welcher Hardware-Ressourcen des Media-Gateways virtuell in eine Vielzahl von virtuellen Media-Gateway-Instanzen (51-56) für die Handhabung von unterschiedlichen Datenquellen, welche an das MGW angeschlossen sind, aufteilt, wobei eine jede der besagten unterschiedlichen Datenquellen von einer der virtuellen Media-Gateway-Instanzen gehandhabt wird,
**dadurch gekennzeichnet,**
a) **dass** das Media-Gateway einen Teilprofil-Speicher (4) umfasst, in welchem Informationen für das Betreiben der besagten virtuellen MGW-Instanzen gespeichert und in drei Teilprofil-Schichten eingestuft werden, wobei die besagten Teilprofil-Schichten die folgenden sind:
- Eine Systemprofil-Schicht, in welcher mindestens ein Systemprofil (11, 12) gespeichert wird, wobei jedes Systemprofil (11, 12) alle globalen Einstellungen zur Kennzeichnung des physischen MGW umfasst;
- eine virtuelle MGW-Profil-Schicht, in welcher mindestens ein virtuelles MGW-Profil (21-23) gespeichert wird, wobei jedes virtuelle MGW-Profil (21-23) eine virtuelle MGW-Instanz kennzeichnet; und
- eine H.248-Profil-Schicht, in welcher mindestens ein H.248-Profil (31-34) gespeichert wird, wobei jedes H.248-Profil (31-34) einen H.248-bezogenen Betriebsmodus kennzeichnet;
b) **dass** das Media-Gateway einen Gateway-Profil-Speicher (5) umfasst, in welchem Gateway-Profile (41-43), nachfolgend als GW-Profile bezeichnet, gespeichert werden, wobei jedes GW-Profil (49-43) eine Zuordnung
- eines der gespeicherten Systemprofile (11, 12),
- eines der gespeicherten virtuellen MGW-Profile (21-23), und
- mindestens eines der gespeicherten H.248-Profile (31-34)
enthält;
c) **dass** jede virtuelle MGW-Instanz (51-56) des Media-Gateways mit einem der gespeicherten Gateway-Profile (41-43) zum Betreiben der virtuellen MGW-Instanz (51-56) assoziiert wird; und
d) **dass** dasselbe gespeicherte H.248-Profil (31-34) mit mehrfachen gespeicherten GW-Profilen (41-43) assoziiert wird,
und/oder dass dasselbe gespeicherte virtuelle MGW-Profil (21-23) mit mehrfachen gespeicherten GW-Profilen (41-43) assoziiert wird,
und/oder dass dasselbe gespeicherte Systemprofil (11, 12) mit mehrfachen gespeicherten GW-Profilen (41-43) assoziiert wird.

2. Media-Gateway nach Anspruch 1, **dadurch gekennzeichnet, dass** dasselbe gespeicherte GW-Profil (41-43) des Media-Gateways mit einer Vielzahl von virtuellen MGW-Instanzen (51-56) assoziiert wird.

3. Media-Gateway nach Anspruch 1, **dadurch gekennzeichnet, dass** das Media-Gateway Mittel zum Erstellen von neuen Teilprofilen aus bestehenden Teilprofilen und/oder aus Profilvorlagen umfasst.

4. Media-Gateway nach Anspruch 1, **dadurch gekennzeichnet, dass** in dem Teilprofil-Speicher (4) Teilprofile (12, 23) gespeichert werden, welche noch keinem gespeicherten GW-Profil (41-43) zugeordnet sind, und/oder dass in dem Gateway-Profil-Speicher (5) GW-Profile (42) gespeichert werden, welche noch keiner virtuellen MGW-Instanz (51-56) zugeordnet sind.

5. Verfahren zum Betreiben eines Media-Gateways, nachfolgend als MGW bezeichnet, für den Transfer von digitalen Mediadaten von einem Netzwerktyp an einen anderen Netzwerktyp, wobei die besagten Netzwerktypen unterschiedliche Datenübertragungsprotokolle verwenden,
wobei das Media-Gateway H.248-gesteuert wird und einen Media-Gateway-Controller umfasst, welcher Hardware-Ressourcen des Media-Gateways virtuell in eine Vielzahl von virtuellen Media-Gateway-Instanzen (51-56) für die Handhabung von unterschiedlichen Datenquellen, welche an das MGW angeschlossen sind, aufteilt, wobei eine jede der besagten unterschiedlichen Datenquellen von einer der virtuellen Media-Gateway-Instanzen gehandhabt wird, wobei das Verfahren die folgenden Schritte umfasst:
a) Speichern von Informationen für das Betreiben der besagten virtuellen MGW-Instanzen in einem Teilprofil-Speicher, und Einstufen der Informationen in drei Teilprofil-Schichten, wobei die besagten Teilprofil-Schichten die folgenden sind:
- Eine Systemprofil-Schicht, in welcher mindestens ein Systemprofil (11, 12) gespeichert wird, wobei jedes Systemprofil (11, 12) alle globalen Einstellungen zum Kennzeichnen des physischen MGW umfasst;
- eine virtuelle MGW-Profil-Schicht, in welcher mindestens ein virtuelles MGW-Profil (21-23) gespeichert wird, wobei jedes virtuelle MGW-Profil (21-23) eine virtuelle MGW-Instanz kennzeichnet; und
- eine H.248-Profil-Schicht, in welcher mindestens ein H.248-Profil (31-34) gespeichert wird, wobei jedes H.248-Profil (31-34) einen H.248-bezogenen Betriebsmodus kennzeichnet;
b) Speichern von Gateway-Profilen (41-43), nachfolgend als GW-Profile bezeichnet, wobei jedes GW-Profil (41-43) eine Zuordnung
- eines der gespeicherten Systemprofile (11, 12),
- eines der gespeicherten virtuellen MGW-Profile (21-23), und
- mindestens eines der gespeicherten H.248-Profile (31-34)
enthält;
c) und Assoziieren und Betreiben einer jeden virtuellen MGW-Instanz (51-56) mit einem der gespeicherten Gateway-Profile (41-43), so dass eine Vielzahl von gespeicherten GW-Profilen (41-43) dasselbe gespeicherte H.248-Profil (31-34) gemeinsam nutzen,
und/oder eine Vielzahl von gespeicherten GW-Profilen (41-43) dasselbe gespeicherte virtuelle MGW-Profil (21-23) gemeinsam nutzen,
und/oder eine Vielzahl von gespeicherten GW-Profilen (41-43) dasselbe gespeicherte Systemprofil (11, 12) gemeinsam nutzen.

6. Verfahren nach Anspruch 5, **gekennzeichnet durch** das Assoziieren und Betreiben einer Vielzahl von virtuellen MGW-Instanzen (51-56) mit demselben gespeicherten GW-Profil (41-43).

7. Verfahren nach Anspruch 5, **gekennzeichnet durch** das Erstellen von neuen Teilprofilen aus bestehenden Teilprofilen und/oder aus Profilvorlagen.

8. Verfahren nach Anspruch 5, **gekennzeichnet durch** das Erstellen oder Ändern von Teilprofilen (12, 23) vor deren Zuordnung zu einem GW-Profil (41-43), welches eine virtuelle MGW-Instanz (51-56) betreibt,
und/oder Ändern der Assoziation von Teilprofilen (11-34) in ein GW-Profil (41-43), bevor das besagte GW-Profil (41-43) eine virtuelle MGW-Instanz (51-56) betreibt.

## Revendications

1. Passerelle de média, ci-après appelée MGW, pour le transfert de données numériques multimédia depuis un type de réseau vers un autre type de réseau, lesdits types de réseau utilisant des protocoles de transfert de données différents,
la passerelle de média étant contrôlée par H.248 et comprenant un contrôleur de passerelle de média qui sépare virtuellement des ressources matérielles de la passerelle de média en une multitude d'instances de passerelle de média virtuelle (51 à 56) pour gérer des sources de données différentes connectées à la MGW, chacune desdites sources de données différentes étant gérée par une des instances de passerelle de média virtuelle,
**caractérisée en ce que**
a) la passerelle de média comprend un dispositif de stockage de sous-profils (4) dans lequel les informations pour exécuter lesdites instances de MGW virtuelle sont stockées et classées en trois couches de sous-profils, lesdites couches de sous-profils étant
- une couche de profil de système dans laquelle au moins un profil de système (11, 12) est stocké, chaque profil de système (11, 12) comprenant tous les paramètres globaux pour caractériser la MGW physique ;
- une couche de profil de MGW virtuelle dans laquelle au moins un profil de MGW virtuelle (21 à 23) est stocké, chaque profil de MGW virtuelle (21 à 23) caractérisant une instance de MGW virtuelle ; et
- une couche de profil H.248 dans laquelle au moins un profil H.248 (31 à 34) est stocké, chaque profil H.248 (31 à 34) caractérisant un mode de fonctionnement lié à H.248 ;
b) la passerelle de média comprend un dispositif de stockage de profils de passerelle (5), dans lequel des profils de passerelle (41 à 43), ci-après appelés profils GW, sont stockés, chaque profil de GW (41 à 43) contenant une attribution
- d'un des profils de système stockés (11, 12),
- d'un des profils de MGW virtuelle stockés (21 à 23), et
- d'au moins un des profils H.248 stockés (31 à 34),
c) chaque instance de MGW virtuelle (51 à 56) de la passerelle de média est associée à un des profils de passerelle stockés (41 à 43) pour exécuter l'instance de MGW virtuelle (51 à 56) ; et
d) le même profil H.248 stocké (31 à 34) est associé à de multiples profils de GW stockés (41 à 43),
et/ou le même profil de MGW virtuelle stocké (21 à 23) est associé à de multiples profils de GW stockés (41 à 43),
et/ou le même profil de système stocké (11, 12) est associé à de multiples profils de GW stockés (41 à 43).

2. Passerelle de média selon la revendication 1, **caractérisée en ce que** le même profil de GW stocké (41 à 43) de la passerelle de média est associé à une multitude d'instances de MGW virtuelle (51 à 56).

3. Passerelle de média selon la revendication 1, **caractérisée en ce que** la passerelle de média comprend des moyens pour créer de nouveaux sous-profils à partir de sous-profils existants et/ou de modèles de profils.

4. Passerelle de média selon la revendication 1, **caractérisée en ce que**
le dispositif de stockage de sous-profils (4) présente des sous-profils (12, 23) stockés qui ne sont pas encore attribués à un profil de GW stocké (41 à 43),
et/ou le dispositif de stockage de profils de passerelle (5) présente des profils de GW (42) stockés qui ne sont pas encore attribués à une instance de MGW virtuelle (51 à 56).

5. Procédé de fonctionnement d'une passerelle de média, ci-après appelée MGW, pour le transfert de données numériques multimédia depuis un type de réseau vers un autre type de réseau, les types de réseau utilisant des protocoles de transfert de données différents, la passerelle de média étant contrôlée par H.248 et comprend un contrôleur de passerelle de média qui sépare virtuellement des ressources matérielles de la passerelle de média en une multitude d'instances de passerelle de média virtuelle (51 à 56) pour gérer des sources de données différentes connectées à la MGW, chacune desdites sources de données différentes étant gérée par une des instances de passerelle de média virtuelle, le procédé comprenant les étapes suivantes :
a) stocker des informations pour exécuter lesdites instances de MGW virtuelle dans un dispositif de stockage de sous-profils et classer les informations en trois couches de sous-profils, lesdites couches de sous-profils étant
- une couche de profil de système dans laquelle au moins un profil de système (11, 12) est stocké, chaque profil de système (11, 12) comprenant tous les paramètres globaux pour caractériser la MGW physique ;
- une couche de profil de MGW virtuelle dans laquelle au moins un profil de MGW virtuelle (21 à 23) est stocké, chaque profil de MGW virtuelle (21 à 23) caractérisant une instance de MGW virtuelle, et
- un niveau de profil H.248 dans lequel au moins un profil H.248 (31 à 34) est stocké, chaque profil H.248 (31 à 34) caractérisant un mode de fonctionnement lié à H.248,
b) stocker des profils de passerelle (41 à 43), ci-après appelés profils de GW, dans un dispositif de stockage de profils de passerelle de la passerelle de média, chaque profil de GW (41 à 43) contenant une attribution
- d'un des profils de système stockés (11, 12),
- d'un des profils de MGW virtuelle stockés (21 à 23), et
- d'au moins un des profils H.248 stockés (31 à 34),
c) et associer et exécuter chaque instance de MGW virtuelle (51 à 56) avec un des profils de passerelle stockés (41 à 43) de sorte qu'une multitude de profils de GW stockés (41 à 43) partage le même profil H.248 stocké (31 à 34) et/ou qu'une multitude de profils de GW stockés (41 à 43) partage le même profil de MGW virtuelle stocké (21 à 23) et/ou qu'une multitude de profils de GW stockés (41 à 43) partage le même profil de système stocké (11, 12).

6. Procédé selon la revendication 5, **caractérisé par** l'association et l'exécution d'une multitude d'instances de MGW virtuelle (51 à 56) avec le même profil de GW stocké (41 à 43).

7. Procédé selon la revendication 5, **caractérisé par** la création de nouveaux sous-profils à partir de sous-profils existants et/ou de modèles de profils.

8. Procédé selon la revendication 5, **caractérisé par** la création ou la modification de sous-profils (12, 23) avant qu'ils ne soient attribués à un profil de GW (41 à 43) qui exécute une instance de MGW virtuelle (51 à 56),
et/ou la modification de l'association de sous-profils (11 à 34) à un profil de GW (41 à 43) avant que ledit profil de GW (41 à 43) exécute une instance de MGW virtuelle (51 à 56).
